# EUROPÄISCHE PATENTSCHRIFT

(11) **EP 0 734 472 B1**
(45) Veröffentlichungstag und Bekanntmachung des Hinweises auf die Patenterteilung: **04.06.1997**
(21) Anmeldenummer: 95904478.5
(22) Anmeldetag: 15.12.1994
(51) Int. Cl.: D21H 13/26, F16J 15/00

(54) **ASBESTFREIER ODER VON ANDEREN ANORGANISCHEN FASERIGEN STOFFEN FREIER WEICHSTOFFDICHTUNGSWERKSTOFF**
SOFT SEALING MATERIAL FREE OF ASBESTOS AND OTHER INORGANIC FIBRES
MATERIAU EXEMPT D'AMIANTE OU D'AUTRES SUBSTANCES FIBREUSES INORGANIQUES POUR GARNITURE D'ETANCHEITE SOUPLE

(30) Priorität: 15.12.1993 DE 4342811
(43) Veröffentlichungstag der Anmeldung: 02.10.1996
(73) Patentinhaber: FRENZELIT-WERKE GMBH & CO. KG, D-95456 Bad Berneck (DE)
(72) Erfinder: BAUER, Gerhard, D-95339 Neuenmarkt (DE); EDLICH-WOLFSHÖFER, Fritz, D-95460 Bad Berneck (DE)
(74) Vertreter: Müller-Boré & Partner Patentanwälte
(86) Internationale Anmeldenummer: EP9404167
(87) Internationale Veröffentlichungsnummer: WO9516822

(56) Entgegenhaltungen:
- EP-A- 0 104 317
- PATENT ABSTRACTS OF JAPAN vol. 016 no. 168 (C-0932) ,22.April 1992 & JP,A,04 013792 (NIPPON VALQUA IND LTD) 17.Januar 1992,
- DATABASE WPI Section Ch, Week 8242 Derwent Publications Ltd., London, GB; Class A88, AN 82-89262E & JP,A,57 147 573 (TEIJIN KK) , 11.September 1982

## Beschreibung

Die Erfindung betrifft einen asbestfreien oder von anderen anorganischen faserigen Stoffen freien Weichstoffdichtungswerkstoff in Form von Papieren, Pappen oder Platten, bestehend aus armierungs- und blattbildenden Fasern, organischem Bindemittel und gegebenenfalls weiteren Zuschlagstoffen.

Die Erfindung betrifft weiterhin ein Verfahren zur Herstellung dieser asbestfreien oder von anderen anorganischen faserigen Stoffen freien Weichstoffdichtungswerkstoffe.

Der vorgenannte Werkstoffe dient zur Herstellung von asbestfreiem oder von anderen anorganischen faserigen Stoffen freiem Dichtungsmaterial für technische Zwecke, insbesondere für Automobilnebendichtungen, Zylinderkopfdichtungen, Dichtungen im Chemieanlagen- und Kraftwerksbau, Dichtungen im Heizungsbau.

Asbest sowie sämtliche anorganische Fasern innerhalb eines bestimmten Faserverteilungsspektrums sowie mit bestimmten Faserlängen (> 5 µm, Ø ≤ 3 µm, Länge/Ø = 3:1) stehen unter dem Verdacht gesundheitsgefährdende Wirkungen auszuüben. Insbesondere ist von Asbest die gesundheitsschädliche Wirkung schon länger bekannt. Hinzu kommt, daß die zu treffenden Maßnahmen, die für die Verarbeitung von Asbest sowie den anderen anorganischen Fasern notwendig sind, die Wirtschaftlichkeit in Frage gestellt. Daher sollen neue Werkstoffe möglichst ohne die vorgenannten Fasern zur Verfügung gestellt werden.

Herkömmliche asbestfreie Weichstoffflachdichtungsmaterialien bestehen entweder aus Gemischen verschiedener Faserarten mit mineralischen Füllstoffzusätzen und organischen Bindemittel (DE-PS 29 14 173 und DE-OS 32 32 255) oder aus expandiertem Graphit.

Faserfreie Dichtungen auf der Basis von expandiertem Graphit sind bekannt; jedoch verhindert die kostenintensive Herstellung und Schwierigkeiten bei der Weiterverarbeitung mangels ausreichender Handhabungsstabilität den Erfolg dieser Produkte auf dem Markt.

Entwicklungen mit faserverstärktem Graphit sind ebenfalls, z.B. aus dem US-Patent 4,443,517 bekannt.

Sämtliche Versuche mit Flockengraphitgehalten von > 60 % ergeben bei organischen Bindemittelanteilen von 3 bis 8 % - notwendig zur Erzielung einer ausreichenden Querschnittsdichtheit und zur wirtschaftlichen Fertigung und maximalen Fasergesamtstoffgehalten von 6 %, negative Ergebnisse in bezug auf die Temperaturstandfestigkeit.

US-Patent 5,286,574 beschreibt eine Zusammensetzung für Dichtungen, wobei der Faserbestandteil aus Polyaramidfaser mit einer üblichen Faserlänge bestehen kann. Eine gebrauchsfertige Dichtung kann aber nur mit Zusätzen von mindestens 25 % Füllstoffen auf Basis von Salzen eines mehrwertigen Metallkations erhalten werden. Das US-Patent 5,286,574 beschreibt keine gezielte Zugabe von fibrillierten und nichtfibrillierten Fasern.

US-Patent 5,306,553 beschreibt die Herstellung eines Halbzeuges, welches erst nach zusätzlicher, kostenaufwendiger Weiterverarbeitung zu einer gebrauchsfertigen Dichtung fertiggestellt werden kann. Graphit wird als Gleitmittel in dieser Zusammensetzung verwendet; dies führt aber in Dichtungen in dieser Art zum Zerfließen. Die gemäß US-PS 5,306,553 eingesetzten Fasern dienen nicht zur Stabilisierung einer "hochgraphithaltigen" Dichtung.

US-Patent 5,272,198, publiziert am 21.12.1993, beschreibt die Verwendung von PAN-Fasern (Acrylfasern) mit einer maximalen Temperaturbeständigkeit von 200 °C.

US-Patent 4,485,138 beschreibt einen Werkstoff, der mit metallischen Einlagen zu Dichtungen weiterverarbeitet werden kann. Hier werden gesundheitsgefährdende Stoffe, wie Fasern (Wollastonite oder Asbestine) und Verarbeitungshilfsmittel wie Toluol eingesetzt.

US-Patent 4,042,747 beschreibt einen hochverformbaren Werkstoff mit Gleitmittel-ähnlichen Eigenschaften für verschiedene Anwendungen. Hier wird insbesondere eine Kombination von Graphit und PTFE verwendet, welche hochverformbar ist. Beim Abprüfen des Setzverhaltens dieses Werkstoffs bei 50 N/mm²-Flächenpressung zeigen diese Werkstoffe bereits bei 20 bis 40 °C ein starkes Fließen. Dieser Effekt ist absolut unerwünscht. Materialien gemäß US-PS 4,042,747 gestatten daher nur eine maximale Flächenpressung von ca. 20 N/mm² zu.

In den Patent Abstracts of Japan, Vol. 16, No. 168 (C-0932) vom 22.04. 1992 ist ein asbestfreier oder von anderen anorganischen faserigen Stoffen freier Weichstoffdichtungswerkstoff in Form von Papieren, Pappen oder Platten, bestehend aus armierungs- und blattbildenden Fasern einer Mischung aus fibrillierten Polyaramidfasern und anderen nichtfibrillierten organischen Fasern, Graphit als Füllstoff und organischen Bindemitteln beschrieben.

In der JP-A-57147573 (als Derwent Abstract AN 82-89262E) ist ein Werkstoff beschrieben, der als Reibematerial für Scheibenbremsen oder Kupplungen geeignet ist. Diese Materialzusammensetzung ist für Dichtwerkstoffe nicht brauchbar.

Es ist daher Aufgabe der Erfindung asbestfreies oder von anderen anorganischen faserigen Stoffen freies Weichstoffdichtungswerkstoffmaterial zur Verfügung zu stellen, bei dem die geforderte Temperaturstandfestigkeit erreicht wird, sowie das durch eine umweltfreundliche Produktion mittels Papierverfahren oder Papier- und Kalandertechnik ohne Verwendung von Lösungsmittel oder aggressive Säuren hergestellt werden kann.

Weiterhin soll der Werkstoff für die Herstellung von speziellen, hochbeanspruchten Flachdichtungen verwendet werden können.

Diese Aufgabe wird durch den Werkstoff gemäß Anspruch 1 sowie durch das Verfahren gemäß Anspruch 5 gelöst.

In den Unteransprüchen sind vorteilhafte Ausführungsformen der Erfindung enthalten.

Die Erfindung schafft daher einen asbestfreien oder anderen anorganischen faserigen Stoffen-freien Weichstoffdichtungswerkstoff, der in Form von Papieren, Pappen oder Platten vorliegen kann. Der erfindungsgemäße Werkstoff besteht aus armierungs- und blattbildenden Fasern, Zuschlagstoffen zur Erhöhung der Reibung zwischen den Graphitteilchen und organischen Bindemittel, wobei als armierungs- und blattbildende Fasern eine Mischung aus nichtfibrillierten organischen Fasern mit einer Bruchdehnung von < 5% (bis 200°C) mit fibrillierten P-Polyaramidfasern sowie Pudergraphit eingesetzt wird.

Die nichtfibrillierten organischen Fasern weisen eine Bruchdehnung von 5 % (bis 200 °C) und eine Länge von 2 bis 4 mm auf. Sie sind in einer Menge von 0,5 bis 1,5 Gew.-% in dem erfindungsgemäßen Werkstoff enthalten.

Die fibrillierten organischen Fasern sind P-Polyaramidfasern. Sie sind in einer Menge von 2 bis 4 % im Werkstoff vorhanden.

Der Pudergraphit ist in einem Anteil von wenigstens 60 Gew.-% in dem Werkstoff enthalten. Der Pudergraphit hat die Beschaffenheit "Feinpuder" und weist eine Kornverteilung von 98 % < 70 µm auf. Als Bindemittel können erfindungsgemäß organische Bindemittel, insbesondere Latices, natur- und synthetische Kautschukke wie NR, NBR, SBR und CR sowie IR, ACN, NVQ, FPM, EPDM, AU bzw. EU, eingesetzt werden. Ihre Menge beträgt 3 bis 8 Gew.-% in dem erfindungsgemäßen Werkstoff.

Dazu kommen die üblichen Vulkanisationsmittel in dem Fachmann bekannten Mengen. Für spezielle Anwendungen, insbesondere für Zylinderkopfdichtungen sind jedoch schwefelfreie Vulkanisationssysteme erwünscht. Insbesondere werden hier Resole bzw. Methylolgruppen-haltige Phenolharze (z.B. Vulkaresen®, Handelsprodukt der Firma Hoechst) eingesetzt. Des weiteren wird der Einsatz von additionsvernetzenden Silikonsystemen für die Tränkung oder Oberflächenbenetzung ermöglicht. Dadurch wird eine noch plastische Verformung nach längerer Lagerzeit ermöglicht.

Zur Erhöhung der Reibung zwischen den Graphitteilchen werden Stoffe wie Glimmer, Talkum, Kieselsäure, amorphe Kieselsäure, Kieselgur, Bariumsulfat, Kaolin und Ton in Betracht zugesetzt.

In einer ganz besonders bevorzugten Ausführungsform besteht der erfindungsgemäße Werkstoff aus 70 Gew.-% Pudergraphit, 0,9 Gew.-% P-Polyaramidstapelfasern, 3,1 Gew.-% fibrillierten P-Polyaramidfasern, 7 Gew.-% Bindemittel, 1,5 % Vulkanisations- bzw. Verarbeitungshilfsmittel sowie 17,5 Gew.-% Zuschlagstoffen zur Erhöhung der Reibung zwischen den Graphitteilchen.

In einer anderen bevorzugten Ausführungsform besteht der Werkstoff aus 75 Gew.-% Pudergraphit, 0,7 Gew.-% P-Polyaramidstapelfasern, 3,3 Gew.-% fibrillierten P-Polyaramidfasern, 4 Gew.-% Bindemittel, 1,5 Gew.-% Vulkanisations- bzw. Verarbeitungshilfsmittel sowie 15,5 Gew.-% Zuschlagstoffen zur Erhöhung der Reibung zwischen den Graphitteilchen.

Die Erfindung betrifft ebenfalls ein Verfahren zur Herstellung von asbestfreiem oder von anderen organischen faserigen freien Weichstoffdichtungswerkstoffen, bei dem die die armierungs- und blattbildenden organischen Fasern, Bindemittel und Zuschlagstoffe in einem Mischer homogenisiert werden und anschließend das Gemisch mit Wärme und Druck behandelt wird. Insbesondere wird der Werkstoff mittels Papierverfahren oder Papier- oder Kalandertechnik hergestellt. Dabei werden die blattbildenden und Armierungsfasern vorzugsweise vor dem Aufschlämmen zusammen in einem Refiner, d.h. in einem Mahlgerät geringfügig gemahlen, so daß eine Verfilzung der blattbildenden mit den Armierungsfasern stattfindet, ohne daß eine höhere Fibrillierung erfolgt.

Die erfindungsgemäß hergestellten Werkstoffe dienen als Dichtungsmaterial für technische Zwecke, insbesondere für Automobilnebendichtungen, Zylinderkopfdichtungen, Dichtungen im Chemieanlagen- und Kraftwerkbau sowie für Dichtungen im Heizungsbau.

Überraschenderweise hat sich gezeigt, daß bei Zugabe nichtfibrillierter organischer Fasern, insbesondere P-Polyaramidfasern mit einer Bruchdehnung < 5 % (bis 200°C) und 2 bis 4 mm Länge mit nur einem Anteil von 0,5 bis 1,5 Gew.-% die geforderte Temperaturstandfestigkeit erreicht wird: Setzverhalten bei 50 N/mm² Flächenpressung und Temperaturanstieg von 20 °C bis 200 °C ≤ 10 % Dickenänderung.

Dem Fachmann ist bekannt, daß nichtfibrillierte Fasern unzureichende blattbildende Eigenschaften für den wirtschaftlichen Papierprozeß haben. Zusätzlich bewirkt die Einbringung von zur Blattbildung ausreichenden Mengen organischer Fasern eine erneute Reduzierung der Temperaturstandfestigkeit; bei Verwendung von P-Polyaramidfasern unwirtschaftliche Verteuerungen.

Überraschenderweise hat sich zusätzlich gezeigt, daß bei Verwendung von Pudergraphit mit der Beschaffenheit "Feinpuder" und einer Kornverteilung 98 % < 70 µm blattbildende Eigenschaften bereits bei Zugabe von 2 bis 4 Gew.-% fibrillierte P-Polyaramidfasern erreicht werden.

Als Gesamteffekt wurde festgestellt, daß durch die (kombinierte) Verwendung von Pudergraphit und der beschriebenen Kornverteilung und einer Mischung aus verstärkenden mit blattbildenden Fasern, wobei als verstärkende Fasern nichtfibillierte organische Fasern mit einer Bruchdehnung von < 5% (bis 200 °C), insbesondere mit einer Länge von 2 bis 4 mm und als blattbildende Fasern fibrillierte P-Polyaramidfasern eingesetzt werden, ein wirtschaftliches Herstellverfahren, kombinierbar mit technologischen Forderungen bezüglich moderner Dichtwerkstoffe, erreicht wird.

Durch diese besonders wirtschaftliche Fertigung ist die Anwendung der aus dem erfindungsgemäßen Werkstoff hergestellten Dichtungen vom Heizungsbau bis zum Automobilbereich gegeben. Durch die technologischen Eigenschaften können Zylinderkopfdichtungen oder auch Dichtungen zur Verwendung im Chemieanlagen- und Kraftwerkbau hergestellt werden.

Die umweltfreundliche Produktion mittels Papierverfahren oder Papier- und Kalandertechnik ermöglicht den Verzicht auf Lösungsmittel (bisher bei Kalandertechnik), auf aggressive Säuren (expandierter Graphit) und auf anorganische Fasern (bisherige Zylinderkopfdichtungs(ZKD)-Papiertechnologie).

In Tabelle 1 werden im folgenden Rezepturen für die erfindungsgemäßen Werkstoffe (Rezeptur A und Rezeptur B sowie Vergleichsrezepturen: Rezeptur C und Rezeptur D angegeben. Das Material wurde auf der Papiermaschine hergestellt. Die angegebenen Werte beziehen sich auf Gew.-%.

**TABELLE 1**

| Rezepturen | A | B | C | D |
|---|---|---|---|---|
| Pudergraphit | 70 | 75 | - | 70 |
| Flockengraphit | - | - | 70 | - |
| P-Polyaramid Stapel | 0,9 | 0,7 | 0,9 | - |
| P-Polyaramid Fibrille | 3,1 | 3,3 | 3,1 | 4 |
| Bindemittel | 7 | 4 | 7 | 7 |
| Vulkanisation/ Verarbeitungsmittel | 1,5 | 1,5 | 1,5 | 1,5 |
| Pulvrige Stoffe ^{*)} | 17,5 | 15,5 | 17,5 | 17,5 |
| | 100 | 100 | 100 | 100 |

| | | | | |
|---|---|---|---|---|
| *) Zuschlagstoffe zur Erhöhung der Reibung zwischen den Graphitteilchen | | | | |

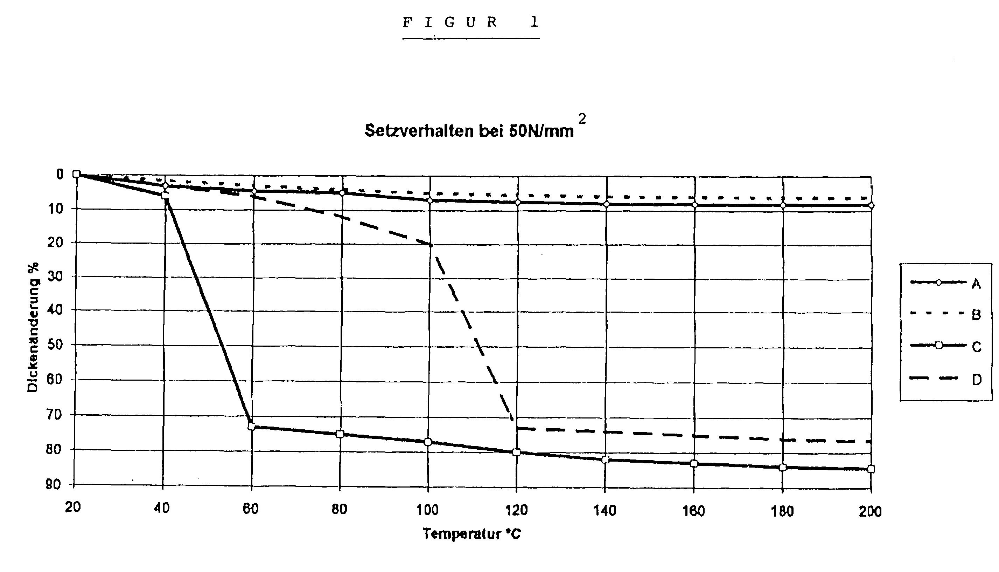

Figur 1 zeigt nun das Setzverhalten der gemäß den Rezepturen A bis D hergestellten Werkstoffen bzw. Dichtungsmaterialien bei 50 N/mm². Dieser Test wurde in Analogie zur DIN 3754 durchgeführt.

Aus Figur 1 wird ersichtlich, daß die erfindungsgemäßen Werkstoffe (Rezepturen A und B) bei einem Temperaturanstieg von + 20 °C bis 200 °C eine Dickenänderung von ≤ 10 % aufweisen, während die Vergleichsbeispiele C und D deutliche Dickenänderung bei 60 °C bzw. bei 120 °C zeigen. Aus Figur 1 sind somit die deutlichen Vorteile des erfindungsgemäßen Werkstoffes ersichtlich.

## Patentansprüche

1. Asbestfreier oder von anderen anorganischen faserigen Stoffen freier Weichstoffdichtungswerkstoff in Form von Papieren, Pappen oder Platten, bestehend aus armierungs- und blattbildenden Fasern, Füllstoffen, organischem Bindemittel und gegebenenfalls weiteren Zuschlagsstoffen, wobei als armierungs- und blattbildende Fasern eine Mischung aus 0,5 bis 1,5 Gew.-% nicht fibrillierten P-Polyaramidfasern mit einer Bruchdehnung < 5 % (bis 200°C) mit einer Länge von 2 bis 4 mm, mit 2 bis 4 Gew.-% fibrillierten P-Polyaramidfasern sowie wenigstens 60 Gew.-% Pudergraphit mit einer Kornverteilung von 98 % < 70 µm eingesetzt wird.

2. Werkstoff gemäß Anspruch 1, dadurch gekennzeichnet, daß er aus 70 Gew.% Pudergraphit, 0,9 Gew.-% P-Polyaramidstapelfasern, 3,1 Gew.-% fibrillierten P-Polyaramidfasern, 7 Gew.-% Bindemittel, 1,5 Gew.-% Vulkanisations- bzw. Verarbeitungshilfsmittel sowie 17,5 Gew.-% Zuschlagstoffen zur Erhöhung der Reibung besteht.

3. Werkstoff gemäß den Ansprüchen 1 und 2, dadurch gekennzeichnet, daß er aus 75 Gew.-% Pudergraphit, 0,7 Gew.-% P-Polyaramidstapelfasern, 3,3 Gew.-% fibrillierten P-Polyaramidfasern, 4 Gew.-% Bindemittel, 1,5 Gew.-% Vulkanisations- bzw. Verarbeitungshilfsmittel sowie 15,5 Gew.-% Zuschlagstoffen zur Erhöhung der Reibung besteht.

4. Werkstoff gemäß einem der vorhergehenden Ansprüche, dadurch gekennzeichnet, daß er ein schwefelfreies Vulkanisationssystem, insbesondere Resole bzw. Methylolgruppen-haltige Phenolharze enthält.

5. Verfahren zur Herstellung von asbestfreiem oder von anderen anorganischen faserigen Stoffen freien Weichstoffdichtungswerkstoffen gemäß einem der vorhergehenden Ansprüche 1 bis 4, bei welchen die armierungs- mit den blattbildenden organischen Fasern, Bindemittel und Zuschlagstoffen zur Erhöhung der Reibung in einem Mischer homogenisiert werden und anschließend das Gemisch mittels Papierverfahren oder Papier- und Kalandertechnik unter Anwendung von Wärme und Druck behandelt wird.

6. Verfahren gemäß Anspruch 5, dadurch gekennzeichnet, daß die blattbildenden mit den Armierungsfasern zusammen in einem Refiner bzw. Mahlgerät geringfügig gemahlen werden, so daß eine Verfilzung zwischen blattbildenden und Armierungsfasern stattfindet, ohne daß eine höhere Fibrillierung erfolgt.

## Claims

1. A soft sealing material in the form of papers, boards or plates which is free of asbestos of any other inorganic fibrous substances, consisting of reinforcement- and sheet-forming fibres, fillers, organic binder and optionally further aggregates, the reinforcement- and sheet-forming fibres used being a mixture of 0.5 to 1.5% by weight of unfibridized p-polyaramid fibres having a breaking extension < 5% (up to 200°C), and a length of 2 to 4 mm, with 2 to 4% by weight of fibridized p-polyaramid fibres and also at least 60% by weight of powder graphite having a particle size distribution of 98% < 70 µm.

2. A material according to Claim 1, characterized in that it consists of 70% by weight of powder graphite, 0.9% by weight of p-polyaramid staple fibres, 3.1% by weight of fibridized p-polyaramid fibres, 7% by weight of binder, 1.5% by weight of vulcanization or processing aids and of 17.5% by weight of aggregates for increasing the friction.

3. A material according to Claims 1 and 2, characterized in that it consists of 75% by weight of powder graphite, 0.7% by weight of p-polyaramid staple fibres, 3.3% by weight of fibridized p-polyaramid fibres, 4% by weight of binder, 1.5% by weight of vulcanization or processing aids and of 15.5% by weight of aggregates for increasing the friction.

4. A material according to any one of the preceding claims, characterized in that it contains a sulphur-free vulcanization system, especially resoles or hydroxymethyl-containing phenolic resins.

5. Processes for producing soft sealing materials free of asbestos or of any other inorganic fibrous substances according to any one of the preceding Claims 1 to 4, which comprise homogenizing the reinforcement-with the sheet-forming organic fibres, binder and aggregates for increasing the friction in a mixer and then treating the mixture under heat and pressure by means of paper processes or paper and calendering technology.

6. A process according to Claim 5, characterized in that the sheet-forming fibres are lightly ground together with the reinforcement fibres in a refiner or milling apparatus so that felting is effected between sheet-forming and reinforcement fibres without higher fibridization taking place.

## Revendications

1. Matériau exempt d'amiante ou d'autres substances fibreuses inorganiques pour garniture d'étanchéité souple, se présentant sous la forme de papiers, cartons ou plaques, constitué de fibres d'armature et de formation de feuilles, de charges, de liants organiques et, le cas échéant, d'autres additifs, utilisant, à titre de fibres formatrices d'armature et formatrices de feuilles, un mélange constitué de 0,5 à 1,5 % en poids de fibres de P-polyaramide non fibrilisées, ayant un allongement à la rupture < 5 % (jusqu'à 200 °C) avec une longueur de 2 à 4 mm, ainsi que de 2 à 4% en poids de fibres de P-polyaramide fibrilisées, ainsi qu'au moins 60 % en poids de graphite pulvérulent, ayant une distribution de grains de 98 % < 70 µm.

2. Matériau selon la revendication 1, caractérisé en ce qu'il est constitué de 70 % en poids de graphite pulvérulent, 0,9 % en poids de fibres artificielles et synthétiques en P-polyaramide, 3,1 % en poids de fibres de P-polyaramide fibrilisées, 7 % en poids de liant, 1,5 % en poids d'auxiliaire de vulcanisation ou de transformation, ainsi que 17,5 % en poids d'additifs destinés à augmenter le frottement.

3. Matériau selon les revendications 1 et 2, caractérisé en ce qu'il est constitué de 75 % en poids de graphite pulvérulent, 0,7 % en poids de fibres artificielles et synthétiques en P-polyaramide, 3,3 % en poids de fibres de P-polyaramide fibrilisées, 4% en poids de liant, 1,5 % en poids d'auxiliaire de vulcanisation ou de transformation, ainsi que 15,5 % en poids d'additifs destinés à augmenter le frottement.

4. Matériau selon l'une des revendications précédentes. caractérisé en ce qu'il contient un système de vulcanisation exempt de soufre, en particulier il contient des résols ou des résines phénoliques contenant des groupes méthylol.

5. Procédé de fabrication de matériaux exempts d'amiante ou d'autres substances fibreuses inorganiques pour garnitures d'étanchéité souples, selon l'une des revendications précédentes 1 à 4, dans lequel les fibres formatrices d'armature et les fibres organiques formatrices de feuilles, les liants et additifs destinés à augmenter le frottement sont homogénéisés dans un mélangeur puis le mélange étant traité par un procédé de fabrication de papier ou bien, selon la technique de travail du papier et de calandrage, avec application de chaleur et de pression.

6. Procédé selon la revendication 5, caractérisé en ce que les fibres formatrices de feuilles et les fibres d'armature formatrices sont légèrement broyées ensemble dans un raffineur, respectivement un appareil de broyage, de manière à ce que se produise un feutrage entre les fibres formatrices de feuilles et les fibres formatrices d'armature, sans que s'effectue une fibrillation poussée.
